# EUROPÄISCHE PATENTSCHRIFT

(11) **EP 1 965 917 B1**
(45) Veröffentlichungstag und Bekanntmachung des Hinweises auf die Patenterteilung: **12.08.2015**
(21) Anmeldenummer: 06818705.3
(22) Anmeldetag: 22.11.2006
(51) Int. Cl.: B01J 37/00, C23C 20/06, C23C 18/02, C23C 18/08

(54) **VERFAHREN ZUR KATALYTISCHEN BESCHICHTUNG VON KERAMISCHEN WABENKÖRPERN**
METHOD FOR CATALYTICALLY COATING CERAMIC HONEYCOMB BODIES
PROCEDE DE REVETEMENT CATALYTIQUE DE CORPS ALVEOLAIRES CERAMIQUES

(30) Priorität: 24.12.2005 DE 102005062317
(43) Veröffentlichungstag der Anmeldung: 10.09.2008
(73) Patentinhaber: Umicore AG & Co. KG, 63457 Hanau-Wolfgang (DE)
(72) Erfinder: PFEIFER, Marcus, Street Apt. Nr. 514, Broken Arrow, OK 74012 (US); SPURK, Paul, 64331 Weiterstadt (DE); KOEGEL, Markus, 63500 Seligenstadt (DE); LOX, Egbert, S., J., 36355 Grebenhain-Hochwaldhausen (DE); KREUZER, Thomas, 61184 Karben (DE)
(86) Internationale Anmeldenummer: PCT/EP2006/011152
(87) Internationale Veröffentlichungsnummer: WO 2007/073807

(56) Entgegenhaltungen:
- EP-A- 1 229 219
- EP-A1- 0 941 763
- EP-A1- 1 110 925
- WO-A-2004/047958
- GB-A- 2 299 525

## Beschreibung

Die Erfindung betrifft ein Verfahren zur Beschichtung von keramischen Wabenkörpern mit einer Beschichtungssuspension, die in einer Trägerflüssigkeit Katalysatorkomponenten als Feststoffe und/oder in gelöster Form enthält. Die beschichteten Wabenkörper werden bevorzugt für die Reinigung von Autoabgasen eingesetzt.

Für die Reinigung von Autoabgasen werden schon seit Jahrzehnten Katalysatoren eingesetzt, die in Form einer Beschichtung auf sogenannten Wabenkörpern aufgebracht sind. Die Wabenkörper werden von parallelen Strömungskanälen für die Abgase durchzogen. Keramische Wabenkörper werden aus hoch feuerfesten Materialien hergestellt. In der überwiegenden Zahl handelt es sich dabei um Cordierit, einem MagnesiumAluminiumsilikat. Weitere gebräuchliche keramische Materialien sind Siliziumkarbid, Aluminiumoxid, Zirkonoxid, Zirkonmullit, Mullit, Siliziumnitrid, Bariumtitanat oder Titanoxid. Die Wabenkörper werden aus diesen Materialien durch Extrusion hergestellt und weisen im allgemeinen eine offene Porenstruktur auf.

Die Strömungskanäle durchziehen die Wabenkörper von einer Eintrittsstirnfläche zur Austrittsstirnfläche. Die Kanäle haben im allgemeinen einen quadratischen Querschnitt und sind in einem engen Raster über den Querschnitt der Wabenkörper angeordnet. Die Zahl der Strömungskanäle pro Querschnittsfläche wird als Zelldichte bezeichnet und kann zwischen 10 und 200 cm⁻² liegen.

Bei der katalytischen Beschichtung der Wabenkörper handelt es sich um eine sogenannte Dispersionsbeschichtung, die unter Verwendung einer zumeist wäßrigen Suspension der Katalysatorkomponenten auf die Wabenkörper aufgebracht wird. Diese Beschichtung wird im folgenden auch als Washcoat-Beschichtung bezeichnet.

Die Katalysatorkomponenten enthalten zum Beispiel feinverteilte Trägermaterialien mit einer hohen spezifischen Oberfläche, auf der die katalytisch aktiven Komponenten, zumeist die Edelmetalle der Platingruppe Platin, Palladium, Rhodium, Iridium und Ruthenium aufgebracht sind. Die Feststoffe in der Katalysatorsuspension werden vor dem Aufbringen auf die Wabenkörper in der Regel durch Naßmahlen homogenisiert. Nach dem Mahlen weisen die Feststoffe der Suspension eine mittlere Korngröße d₅₀ zwischen 3 und 5 µm auf.

Beispiele für Trägermaterialien sind einfache und zusammengesetzte Oxide, wie aktives Aluminiumoxid, Zirkonoxid, Zinnoxid, Ceroxid oder andere Seltenerdoxide, Siliziumoxid, Titanoxid beziehungsweise Silikate wie Aluminiumsilikat oder Titanate wie Barium- oder Aluminiumtitanat und Zeolithe. Besonders bewährt als temperaturbeständige Trägermaterialien haben sich insbesondere die verschiedenen Phasen von aktivem Aluminiumoxid der Übergangsreihe, welche durch Dotieren mit Siliziumoxid und Lanthanoxid, aber auch durch Zirkonoxid und Ceroxid, stabilisiert werden können.

Wenn im folgenden von der Beschichtung der Wabenkörper mit einer katalytisch aktiven Schicht gesprochen wird, so ist damit die Beschichtung der Kanalwände der Strömungskanäle gemeint. Eine Beschichtung des Außenmantels des Wabenkörpers ist unerwünscht. Die aufgebrachte Menge an Beschichtung wird im allgemeinen bezogen auf das äußere Volumen des Wabenkörpers in Gramm pro Liter angegeben. Dem Fachmann sind die gängigen Verfahren zur Durchführung einer solchen Beschichtung hinreichend bekannt.

Für die Erfüllung der an sie gestellten Forderungen, muß die Beschichtung eine von der jeweiligen Aufgabe abhängige Konzentration aufweisen. Im allgemeinen gilt, daß die Konzentration um so größer sein muß, je aktiver und alterungsbeständiger die Beschichtung sein soll. In der Praxis werden je nach Anwendungsfall 10 bis 300 g/l benötigt. Die maximal erreichbare Konzentration kann jedoch aus verschiedenen Gründen unterhalb der katalytisch erforderlichen Konzentration liegen. So nimmt mit zunehmender Konzentration und damit Schichtdicke die Haftfestigkeit der Beschichtung ab. Darüber hinaus verringern große Schichtdicken den hydraulischen Durchmesser der Strömungskanäle und erhöhen somit den Abgasgegendruck (Staudruck) des Katalysators.

Es gibt Einsatzgebiete, wie zum Beispiel die Oxidation von Kohlenwasserstoffen und Kohlenmonoxid im Dieselabgas ("Dieseloxidationskatalysator"), bei denen nur eine relativ geringe Katalysatormasse im Bereich zwischen 100 und 200 g pro Liter Wabenkörpervolumen für die Reaktion erforderlich ist. Eine weitere Erhöhung der Katalysatormasse unter Beibehaltung des Edelmetallgesamtgehaltes ist hier nicht mit einem Aktivitätsvorteil verbunden. Bei anderen katalytischen Reaktionen wie beispielsweise der Speicherung und Reduktion von Stickoxiden ("Stickoxid-Speicherkatalysator") oder der selektiven katalytischen Reduktion von Stickoxiden mittels Ammoniak ("SCR Katalysator") ist hingegen eine Erhöhung der aktiven Masse wünschenswert, was jedoch wegen der genannten Probleme mit der Haftfestigkeit der Beschichtung und dem Staudruck des fertigen Katalysators nur in Grenzen möglich ist.

Die US 5,334,570 schlägt zur Verringerung des hohen Staudrucks vor, die katalytische Beschichtung in die Poren von keramischen Wabenkörpern zu verlegen. Die in dieser Patentschrift verwendeten keramischen Wabenkörper besaßen eine offene Porosität von 30 bis 45 % und mittlere Porendurchmesser von 3 bis 10 µm. Zur katalytischen Beschichtung wurden deshalb Katalysatormaterialien mit kolloidalen Partikeldurchmessern zwischen 0,001 und 0,1, bevorzugt zwischen 0,001 und 0,05 µm ausgewählt, die beim Kontaktieren der Wabenkörper mit einer entsprechenden kolloidalen Beschichtungsdispersion in die Poren der Wabenkörper eindringen. Gemäß der Patentschrift wurden die Wabenkörper zum Kontaktieren mit der Beschichtungsdispersion in die Beschichtungsdispersion eingetaucht. Auf diese Weise konnten 90 bis 95 % der kolloidalen Washcoat-Partikel in den Poren der Wabenkörper abgelagert werden, so daß der Querschnitt der Strömungskanäle durch die Beschichtung kaum vermindert und somit der Staudruck nur unwesentlich erhöht wurde.

In den letzten Jahren wurden keramische Wabenkörper mit deutlich erhöhter Porosität von ca. 60 bis 65 % und mittleren Porendurchmessern von 10 bis 20 µm entwickelt. Zielsetzung hierbei war es, die Kanalwände für die Katalysatorpartikel durchgängig zu machen, so daß sich diese nicht nur als Schicht auf der Kanaloberfläche sondern auch im Porensystem der Wand ablagern können. Somit können bei vergleichbarer Katalysatormasse geringere Schichtdicken bzw. umgekehrt bei gleicher Katalysatorschichtdicke höhere Beladungskonzentrationen erzielt werden [Tao et al., SAE 2004-01-1293].

Zur Beschichtung von Wabenkörpern werden zumeist die katalytisch aktiven, wasserunlöslichen, pulverförmigen Komponenten in Wasser oder einer organischen Flüssigkeit suspendiert, gemahlen und das Substrat anschließend durch Tauchen in die Suspension, durch Übergießen mit der Suspension oder durch Einsaugen oder Einpumpen der Suspension beschichtet.

Verwendet man hierbei die oben beschriebenen, neu entwickelten porösen Wabenkörper, so dringt tatsächlich ein Teil der katalytisch aktiven Substanzen in das Porensystem des Wabenkörpers ein und lagert sich dort ab. Allerdings gelingt es mit den beschriebenen Verfahren nicht, die Poren des Wabenkörpers vollständig auszufüllen und somit optimal zu nutzen.

Aufgabe der vorliegenden Erfindung ist es, ein Verfahren zur Beschichtung von porösen Wabenkörpern anzugeben, welches es gestattet, sowohl die geometrischen Oberflächen der Strömungskanäle als auch die Poren der Kanalwände definiert mit einem Katalysator zu beschichten. Zielsetzung dabei ist die Erhöhung der Menge an katalytisch aktiven Komponenten in den Wänden der Wabenkörper zur Optimierung des Staudruckverhaltens nach Beschichtung bei gleicher Katalysatormasse bzw. die Erhöhung der aktiven Masse bei vergleichbarem Staudruckverhalten nach Beschichtung.

Das Verfahren verwendet keramische Wabenkörper, welche von einer Eintrittsstirnfläche zu einer Austrittsstirnfläche von parallelen Strömungskanälen durchzogen werden, die durch Kanalwände mit einer offenen Porenstruktur gegeneinander abgegrenzt sind. Zur Beschichtung wird eine Katalysatorsuspension verwendet, welche in einer Trägerflüssigkeit suspendierte Feststoffe enthält. Das Verfahren ist dadurch gekennzeichnet, daß man die Strömungskanäle wechselseitig an der Ein- und Austrittsstirnfläche vorübergehend verschließt, die Katalysatorsuspension von der Eintrittsfläche zur Austrittsfläche durch den Wabenkörper hindurchströmen läßt und anschließend die wechselseitig verschlossenen Strömungskanäle wieder öffnet.

Im Rahmen der vorliegenden Erfindung werden unter dem Begriff Wabenkörper sogenannte Durchfluß-Wabenkörper verstanden, deren Strömungskanäle an beiden Enden offen sind. Erfindungsgemäß werden diese Strömungskanäle nur zum Zweck der Beschichtung vorübergehend wechselseitig an Ein- und Austrittsstirnfläche verschlossen. Im Gegensatz hierzu stehen die sogenannten Wandfluß-Wäbenkörper, deren Strömungskanäle permanent wechselseitig an Ein- und Austrittsstirnfläche verschlossen sind.

Das Verfahren zwingt die Beschichtungssuspension, im Gegensatz zu konventionellen Beschichtungsverfahren von Wabenkörpern, beim Beschichtungsvorgang durch das Porensystem des Materials der Kanalwände zu strömen. Hierdurch werden die Oberflächen der Poren gezielt beschichtet. Abhängig von der Korngrößenverteilung der Feststoffe in der Beschichtungssuspension und vom mittleren Porendurchmesser des keramischen Materials des Wabenkörpers kommt es hierbei zu einer mehr oder weniger ausgeprägten Filtrierung der Beschichtungssuspension. Es ist also durch entsprechende Wahl der Korngrößenverteilung möglich, das Massenverhältnis der in den Poren abgeschiedenen Beschichtungssuspension zu der auf den Kanalwänden abgeschiedenen Beschichtungssuspension definiert einzustellen. Bevorzugt wird jedoch angestrebt, die Poren der Kanalwände möglichst vollständig mit Katalysatormasse zu füllen, um die Beschichtung der Wandflächen bei der gewünschten Beschichtungskonzentration so gering wie möglich zu halten. Bei einer entsprechend geringen Beschichtungskonzentration kann sogar die gesamte Katalysatormasse in den Poren untergebracht werden.

Die Katalysatorsuspension kann wahlweise durch die Wabenkörper hindurchsaugt oder hindurchpumpt werden. Alternativ können die Wabenkörper in die Katalysatorsuspension eingetaucht oder mit der Katalysatorsuspension übergossen werden, wenn sichergestellt wird, daß bei diesem Vorgang die Beschichtungssuspension durch die Kanalwände hindurchtreten muß.

Zum vorübergehenden wechselseitigen Verschließen der Strömungskanäle kommen die für die Herstellung von wechselseitig verschlossenen Wandflußfiltern bekannten Verfahren zum Einsatz. Ebenso wie bei den Wandflußfiltern ist die Dicke der vorübergehenden Verschlüsse auf wenige Millimeter begrenzt.

Die Verschlußmassen sind nicht beschränkt. Sie müssen sich lediglich mit den bekannten Verfahren in die Strömungskanäle einbringen lassen und bei den üblichen Arbeitstemperaturen beim Beschichten von Wabenkörpern fest sein. Gewöhnlich werden die Wabenkörper bei Raumtemperatur beschichtet. Geeignet sind zum Beispiel Verschlußmassen, die bei erhöhter Temperatur, bevorzugt über 80 °C, schmelzen oder verdampfen, durch Lösungsmittel herausgelöst werden können oder sich thermisch zersetzen oder chemisch umgesetzt werden können. Zur letzteren Kategorie gehören insbesondere organische Verschlußmassen, die entweder verbrannt oder verascht werden können. Geeignete Massen dieser Art sind zum Beispiel ausbrennbare wasserunlösliche Füllmitteln, wie natürliche oder synthetische Wachse, insbesondere Paraffinwachs oder Polymere, wie Polyäthylenwachs. Bevorzugt sind Wachse mit einem Schmelzpunkt über 80 °C.

Für das erfindungsgemäße Verfahren sind generell alle porösen Wabenkörper mit offener Porosität geeignet. Abhängig von der mittleren Porengröße müssen die Feststoffe der Beschichtungsdispersion entsprechend kleine Partikeldurchmesser aufweisen. Für mittlere Porengrößen im Bereich zwischen 3 und 10 µm werden bevorzugt Feststoffe mit mittleren Partikeldurchmessern im kolloidalen Bereich (<1 µm eingesetzt). Geeignet sind aber auch Feststoffe mit einer mittleren Korngröße d₅₀ im Bereich zwischen 3 und 5 µm, beziehungsweise zwischen 1 und 3 µm. Aber auch Feststoffe mit einem breiten Kornspektrum oder Feststoffe mit einer mehrmodalen Korngrößenverteilung können verwendet werden. Es findet dann bei der Beschichtung eine Filtration statt: Partikel mit kleinen Partikeldurchmessern werden in den Poren des Wabenkörpers abgelagert, während die größeren Partikel auf den Kanalwänden abgeschieden werden. Bevorzugt werden jedoch hochporöse Wabenkörper mit einer Porosität zwischen 30 und 90 % und mit einem mittleren Porendurchmesser zwischen 10 und 50 µm verwendet.

Das erfindungsgemäße Verfahren gestattet es, im Vergleich zu Standard-Wabenkörpern mehr katalytisch aktive Masse bei vergleichbarer Schichtdicke auf der Kanaloberfläche bzw. bei vergleichbarem hydraulischem Durchmesser des Strömungskanals auf die Träger aufzubringen.

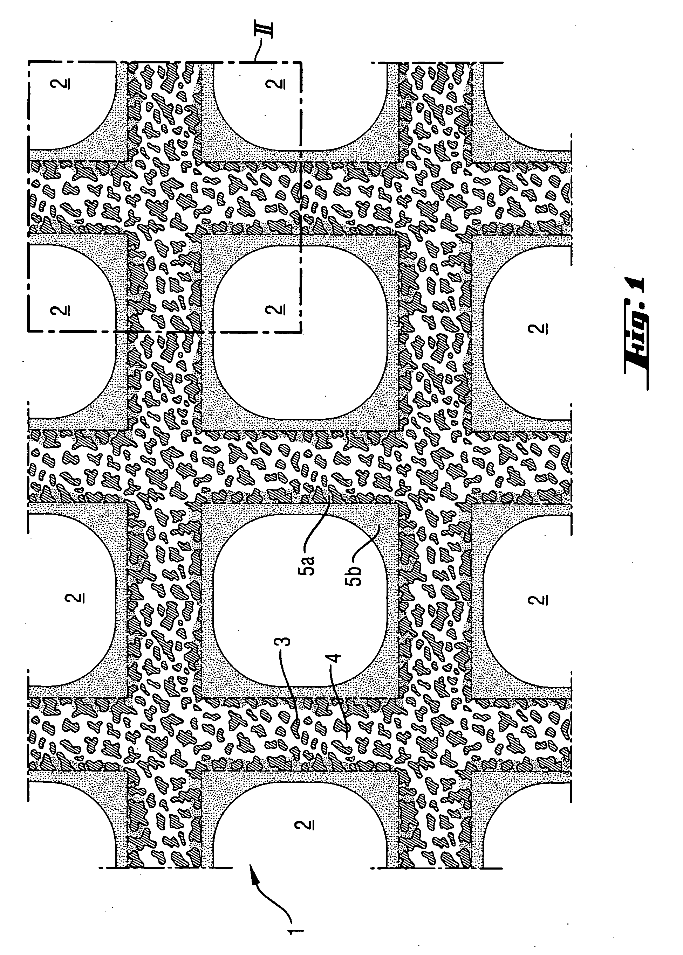

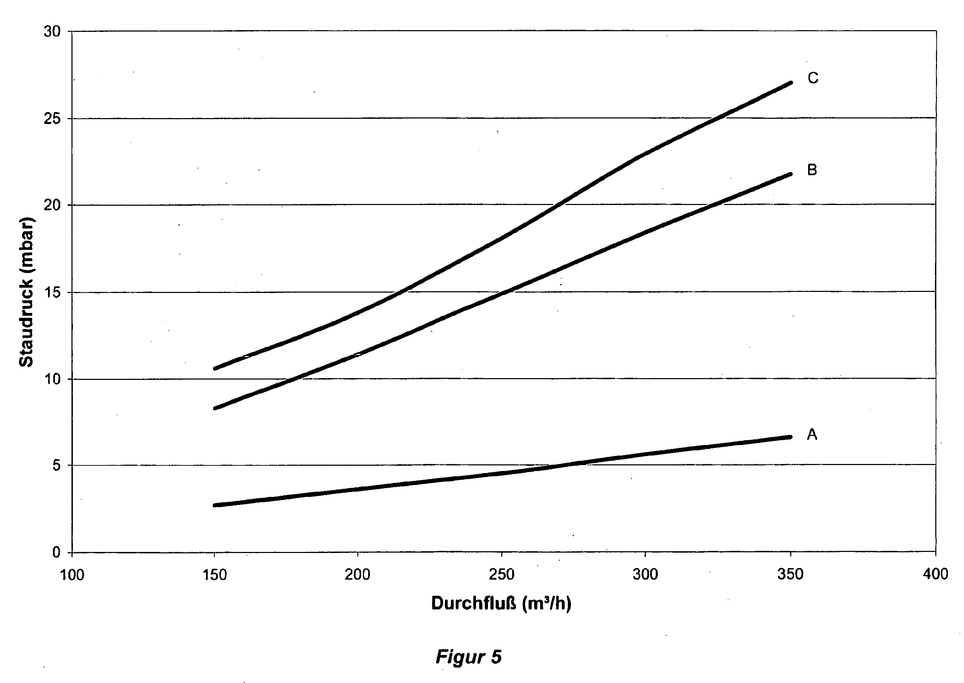

Die folgenden Beispiele und die Figuren 1 und 5 sollen die Erfindung näher erläutern. Es zeigen
- **Figur 1:**: Zeichnung nach fotografischen Aufnahmen eines Querschliffs durch einen konventionell beschichteten Wabenkörper nach Vergleichsbeispiel 1
- **Figur 2:**: Ausschnitt II von Figur 1
- **Figur 3:**: Zeichnung nach fotografischen Aufnahmen eines Querschliffs durch einen erfindungsgemäß beschichteten Wabenkörper nach Beispiel 1
- **Figur 4:**: Ausschnitt IV von Figur 3
- **Figur 5:**: Staudruck als Funktion des Durchflusses für drei Wabenkörper:
A) Unbeschichteter Wabenkörper
B) Erfindungsgemäß beschichteter Wabenkörper
C) Konventionell beschichteter Wabenkörper

### Beispiel 1

Die Strömungskanäle eines Wabenkörpers aus Cordierit wurden wechselseitig mit einem. Paraffinwachs verschlossen. Der Wabenkörper hatten einen Durchmesser von 14,4 cm, eine Länge von 15,24 und eine Zelldichte von 46,5 cm⁻² mit einer Dicke der Kanalwände von 0,3 mm. Die Porosität des Materials betrug 65 % bei einem mittleren Porendurchmesser von 22 µm.

Dieser Wabenkörper wurde mit einem konventionellen SCR-Katalysator aus einem mit 1,5 Gew.-% Vanadiumpentoxid und 9,3 Gew.-% Wolfram belegten Titandioxidpulver beschichtet. Hierzu wurde das Titanoxidpulver in Wasser suspendiert und mittels einer Dyno-Mühle bis zu einem mittleren Partikeldurchmesser d₅₀ kleiner 1 µm bzw. d₉₀ < 3 µm gemahlen. Diese Suspension wurde durch den Wabenkörper gepumpt und überschüssiger Washcoat mittels Anlegen eines Vakuums an der Rückseite des Filters abgesaugt. Durch einmaliges Wiederholen dieses Vorgangs konnte der Wabenkörper mit einer Katalysatormenge von 240 g pro Liter Wabenkörpervolumen beschichtet werden. Nach Beschichtung wurde der Wabenkörper getrocknet und kalziniert, wobei die wechselseitigen Paraffinverschlüsse der Strömungskanäle schmolzen und verbrannten.

### Vergleichsbeispiel 1

Zum Vergleich wurde ein gleicher Wabenkörper wie im Beispiel 1 ohne vorheriges wechselseitiges Verschließen der Strömungskanäle mit der Katalysatorsuspension beschichtet, getrocknet und kalziniert. Die Katalysatormasse nach Beschichtung betrug 234 g/l.

Zur Untersuchung der Schichtdickenverteilung wurden Querschliffe von den Katalysatoren angefertigt und im Rasterelektronenmikroskop untersucht. Zeichnungen von entsprechenden fotografischen Aufnahmen sind in Figur 1 bis 4 wiedergegeben.

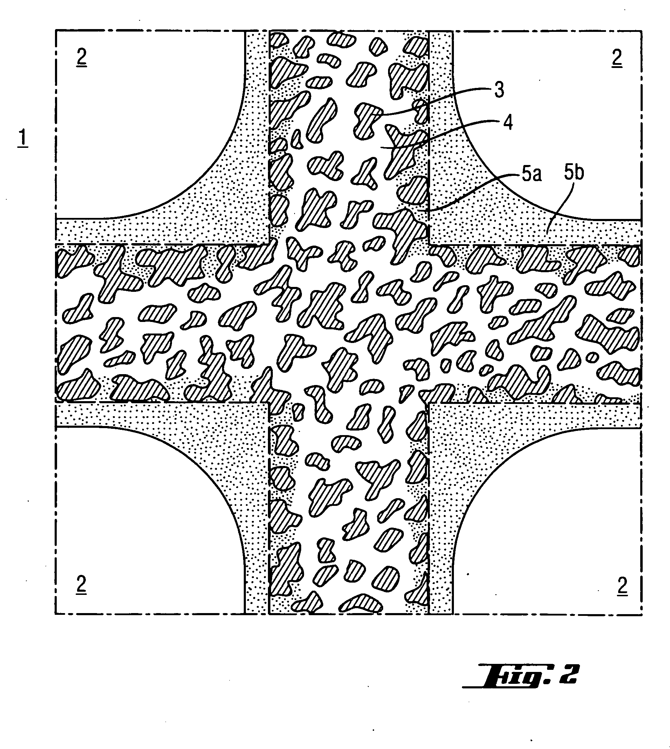

Figur 1 zeigt einen Querschnitt des gemäß Vergleichsbeispiel 1 beschichteten Wabenkörpers (1). Figur 2 gibt den Ausschnitt II von Figur 1 vergrößert wieder. Bezugsziffer (2) bezeichnet die Strömungskanäle des Wabenkörpers und (3) sein Cordierit-Gerüst mit den Poren (4). Nahezu das gesamte Katalysatormaterial befindet sich als Beschichtung (5b) auf den Kanalwänden. Nur ein kleiner Teil (5a) ist im Randbereich der Kanalwände in die Poren des Cordierit-Gerüstes eingedrungen.

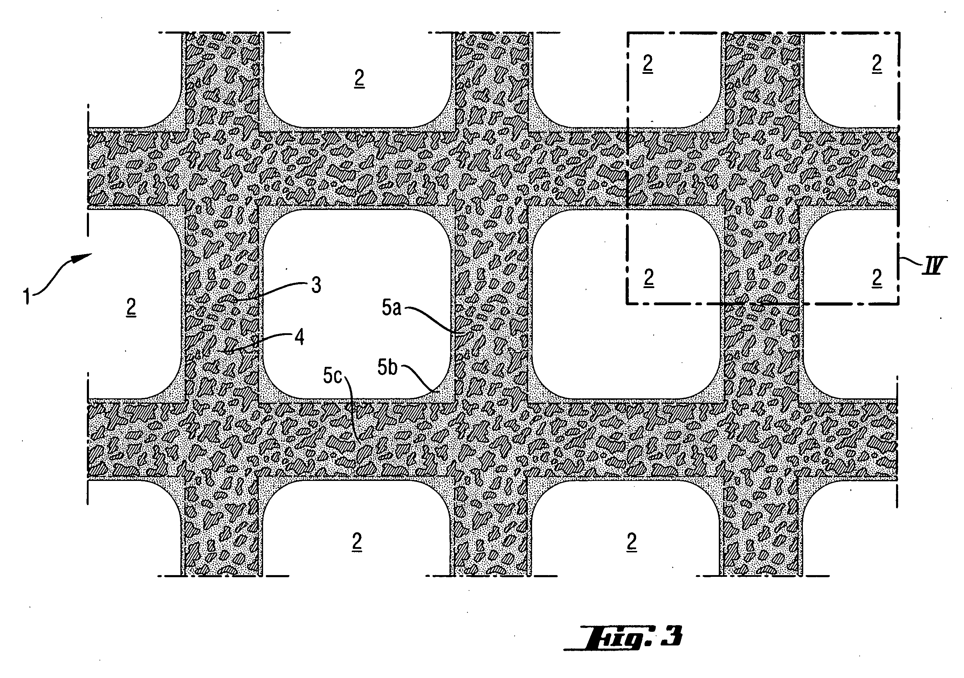

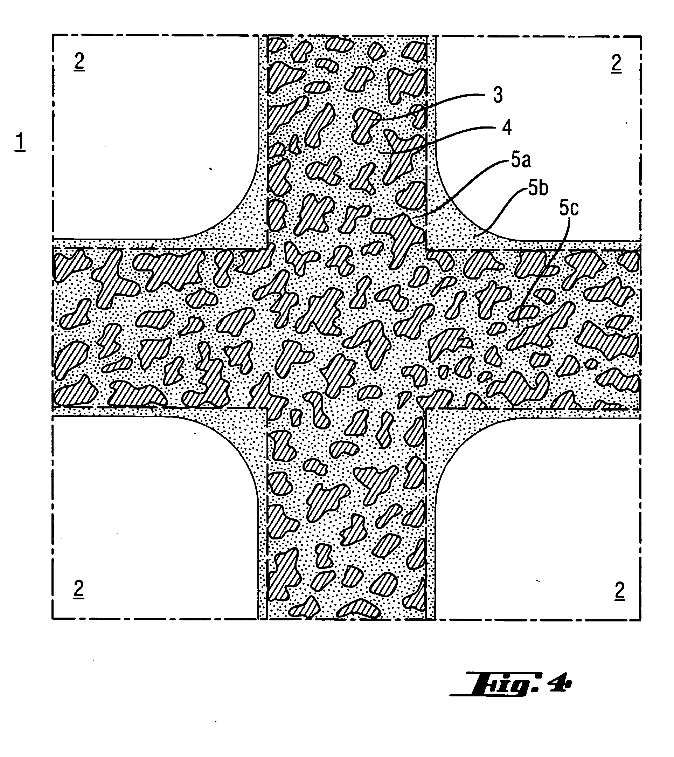

Figur 3 und 4 sind die zu den Figuren 1 und 2 entsprechenden Querschnitte des gemäß Beispiel 1 beschichteten Katalysators. Durch das Hindurchpumpen der Beschichtungssuspension durch die die Strömungskanäle begrenzenden Kanalwände sind die Poren des Cordierit-Gerüstes auch im Innern der Kanalwände (5c) sowie im Randbereich der Kanalwände (5a) mit Katalysatormaterial gefüllt. Auf den Kanalwänden befindet sich weiteres Beschichtungsmaterial (5b), da bei der gewählten Beschichtungskonzentration von ca. 240 g/l nicht das gesamte Katalysatormaterial in den Poren der Kanalwände untergebracht werden kann.

### Beispiel 2

Zur Messung des Staudrucks von erfindungsgemäß und konventionell beschichteten Wabenkörpern wurden zwei weitere Wabenkörper mit denselben Abmessungen wie in den vorhergehenden Beispielen analog zu Beispiel 1 und Vergleichsbeispiel 1 mit einem eisenausgetauschten Zeolithen beschichtet. Die Beschichtungskonzentration auf dem erfindungsgemäß beschichteten Wabenkörper betrug 330 g/l Wabenkörpervolumen und auf dem konventionell beschichteten Wabenkörper 327,5 g/l.

Der durch diese Wabenkörper verursachte Staudruck wurde in Abhängigkeit des Durchflusses von Luft gemessen. Zum Vergleich wurde auch ein unbeschichteter Wabenkörper untersucht. Die Ergebnisse dieser Messungen sind in Figur 5 gezeigt. Kurve A ist die Staudruckkurve für den unbeschichteten Wabenkörper, Kurve B für den erfindungsgemäß beschichteten und Kurve C für den konventionell beschichteten Wabenkörper.

Der erfindungsgemäß beschichtete Wabenkörper weist einen deutlich geringeren Staudruck als der konventionell beschichtete Wabenkörper auf. Obwohl bei der gewählten Beschichtungsmenge von mehr als 300 g/l nur ein kleiner Anteil der Beschichtungsmasse von den Poren in den Kanalwänden aufgenommen werden kann, wirkt sich das sehr positiv auf den Staudruck aus.

## Patentansprüche

1. Verfahren zur katalytischen Beschichtung von keramischen Wabenkörpern, welche von einer Eintrittsstirnfläche zu einer Austrittsstirnfläche von parallelen Strömungskanälen durchzogen werden, die von Kanalwänden mit einer offenen Porenstruktur gegeneinander abgegrenzt sind, wobei zur Beschichtung eine Katalysatorsuspension verwendet wird, welche in einer Trägerflüssigkeit suspendierte Feststoffe enthält,
**dadurch gekennzeichnet,**
**daß** man die Strömungskanäle wechselseitig an der Ein- und Austrittsstirnfläche vorübergehend verschließt, die Katalysatorsuspension von der Eintrittsfläche zur Austrittsfläche durch den Wabenkörper hindurchströmen läßt und anschließend die wechselseitig verschlossenen Strömungskanäle wieder öffnet.

2. Verfahren nach Anspruch 1,
**dadurch gekennzeichnet,**
**daß** man die Katalysatorsuspension durch den Wabenkörper hindurchsaugt oder hindurchpumpt.

3. Verfahren nach Anspruch 1,
**dadurch gekennzeichnet,**
**daß** man den Wabenkörper in die Katalysatorsuspension eintaucht oder mit der Katalysatorsuspension übergießt.

4. Verfahren nach Anspruch 2 oder 3,
**dadurch gekennzeichnet,**
**daß** man die Strömungskanäle wechselseitig mit einer Verschlußmasse verschließt, die bei den üblichen Arbeitstemperaturen beim Beschichten von Wabenkörpern fest ist und die bei erhöhter Temperatur schmilzt oder verdampft, durch Lösungsmittel herausgelöst werden kann, sich thermisch zersetzen läßt oder chemisch umgesetzt werden kann.

5. Verfahren nach Anspruch 4,
**dadurch gekennzeichnet,**
**daß** als Verschlußmasse ein natürliches oder synthetisches Wachs mit einem Schmelzpunkt oberhalb von 80 °C verwendet wird, welches beim Kalzinieren des beschichteten Wabenkörpers verbrennt.

6. Verfahren nach Anspruch 1,
**dadurch gekennzeichnet,**
**daß** die Wabenkörper eine Porosität zwischen 30 und 90 % mit einem mittleren Porendurchmesser von 10 bis 50 µm aufweisen.

7. Verfahren nach Anspruch 1,
**dadurch gekennzeichnet,**
**daß** die Feststoffe der Suspension eine mittlere Korngröße d₅₀ im Bereich zwischen 3 und 5 µm aufweisen.

8. Verfahren nach Anspruch 1,
**dadurch gekennzeichnet,**
**daß** die Feststoffe der Suspension eine mittlere Korngröße d₅₀ im Bereich zwischen 1 und 3 µm aufweisen.

9. Verfahren nach Anspruch 1,
**dadurch gekennzeichnet,**
**daß** die Feststoffe der Suspension eine mittlere Korngröße d₅₀ kleiner als 1 µm aufweisen.

## Claims

1. Method for the catalytic coating of ceramic honeycomb structures, which are traversed by parallel flow ducts from an entry end face to an exit end face, which flow ducts are mutually delimited by duct walls with an open pore structure, a catalyst suspension, which contains solid material suspended in a carrier liquid, being used for coating
**characterised in that**
the flow ducts are temporarily alternately sealed at the entry and exit end faces, allowing the catalyst suspension to flow through the honeycomb structure from the entry face to the exit face, after which the alternately sealed flow ducts are re-opened.

2. Method in accordance with Claim 1,
**characterised in that**
the catalyst suspension is drawn or pumped through the honeycomb structure.

3. Method in accordance with Claim 1,
**characterised in that**
the honeycomb structure is immersed in the catalyst suspension or doused with the catalyst suspension.

4. Method in accordance with Claim 2 or 3,
**characterised in that**
the flow ducts are alternately sealed using a sealant, which is solid at the usual working temperatures for coating honeycomb structures and which melts or evaporates at a higher temperature, can be dissolved out by solvents, can be thermally decomposed or can be chemically converted.

5. Method in accordance with Claim 4,
**characterised in that**
a natural or synthetic wax with a melting point above 80 °C is used as the sealant, which combusts on calcination of the coated honeycomb structure.

6. Method in accordance with Claim 1,
**characterised in that**
the honeycomb structures have a porosity between 30 % and 90 %, with a mean pore diameter between 10 and 50 µm.

7. Method in accordance with Claim 1,
**characterised in that**
the solid material in the suspension has a mean particle size d₅₀ in the range between 3 and 5 µm.

8. Method in accordance with Claim 1,
**characterised in that**
the solid material in the suspension has a mean particle size d₅₀ in the range between 1 and 3 µm.

9. Method in accordance with Claim 1,
**characterised in that**
the solid material in the suspension has a mean particle size d₅₀ of less than 1 µm.

## Revendications

1. Procédé pour le revêtement catalytique de corps alvéolaires céramiques, qui sont traversés, d'une face frontale d'entrée vers une face frontale de sortie, par des canaux d'écoulement parallèles, délimités les uns par rapport aux autres par des parois de canal présentant une structure à pores ouverts, une suspension de catalyseur, qui contient des solides en suspension dans un liquide support, étant utilisée pour le revêtement,
**caractérisé en ce que**
on ferme les canaux d'écoulement de manière provisoire, alternativement, au niveau de la face frontale d'entrée et de la face frontale de sortie, on laisse s'écouler la suspension de catalyseur de la surface d'entrée vers la surface de sortie au travers du corps alvéolaire et on ouvre ensuite à nouveau les canaux d'écoulement fermés alternativement.

2. Procédé selon la revendication 1,
**caractérisé en ce que**
on aspire ou pompe la suspension de catalyseur au travers du corps alvéolaire.

3. Procédé selon la revendication 1,
**caractérisé en ce que**
on immerge le corps alvéolaire dans la suspension de catalyseur ou on l'arrose avec la suspension de catalyseur.

4. Procédé selon la revendication 2 ou 3,
**caractérisé en ce que**
on ferme les canaux d'écoulement alternativement par une masse de scellement, qui est solide aux températures de travail usuelles lors du revêtement de corps alvéolaires et qui fond ou qui s'évapore à température augmentée, qui peut être éliminée par dissolution par un solvant, qui se laisse décomposer thermiquement ou qui peut être transformée chimiquement.

5. Procédé selon la revendication 4
**caractérisé en ce que**
on utilise, comme masse de scellement, une cire naturelle ou synthétique présentant un point de fusion supérieur à 80 °C, qui brûle lors de la calcination du corps alvéolaire revêtu.

6. Procédé selon la revendication 1,
**caractérisé en ce que**
les corps alvéolaires présentent une porosité entre 30 et 90 % à un diamètre moyen des pores entre 10 et 50 µm.

7. Procédé selon la revendication 1,
**caractérisé en ce que**
les solides de la suspension présentent une grosseur moyenne de particule d₅₀ dans la plage comprise entre 3 et 5 µm.

8. Procédé selon la revendication 1,
**caractérisé en ce que**
les solides de la suspension présentent une grosseur moyenne de particule d₅₀ dans la plage comprise entre 1 et 3 µm.

9. Procédé selon la revendication 1,
**caractérisé en ce que**
les solides de la suspension présentent une grosseur moyenne de particule d₅₀ inférieure à 1 µm.
